(19) Europäisches Patentamt / European Patent Office / Office européen des brevets

(11) **EP 2 456 224 A2**

(12) **EUROPEAN PATENT APPLICATION**

(43) Date of publication:
**23.05.2012 Bulletin 2012/21**

(51) Int Cl.:
*H04N 21/472* *(2011.01)*     *H04N 21/436* *(2011.01)*
*H04N 21/4147* *(2011.01)*    *H04N 21/442* *(2011.01)*
*H04N 5/76* *(2006.01)*       *H04N 5/765* *(2006.01)*
*H04N 21/41* *(2011.01)*

(21) Application number: **11178249.6**

(22) Date of filing: **22.08.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.11.2010 JP 2010257254**

(71) Applicant: **Kabushiki Kaisha Toshiba
Tokyo 105-8001 (JP)**

(72) Inventors:
• **Honsawa, Kunio**
  **Tokyo, 105-8001 (JP)**
• **Kazawa, Hiroshi**
  **Tokyo, 105-8001 (JP)**
• **Koshino, Naozumi**
  **Tokyo, 105-8001 (JP)**
• **Nakajima, Atsushi**
  **Tokyo, 105-8001 (JP)**

(74) Representative: **HOFFMANN EITLE
Arabellastraße 4
81925 München (DE)**

(54) **Recorder, recording device, and recorder control method**

(57)     According to one embodiment, a recorder (100) includes an information receiving module (14), a content selection receiving module (15), a data volume calculating module (16), a data volume determining module (17), and a sending module (19). The information receiving module (14) receives, from a recording device (200) connected to the recorder (100) via a network (NT), an available recording capacity of a recording medium (23) in the recording device (200) and information indicating the maximum compressibility of the data compression function of the recording device (200). The content selection receiving module (15) receives selection of content data to be sent to the recording device (200). The data volume calculating module (16) calculates, based on the maximum compressibility received by the information receiving module (14), the data volume of the content data compressed at the maximum compressibility. The data volume determining module (17) determines whether the data volume calculated by the data volume calculating module (16) is within the available recording capacity of the recording medium (23). The sending module (19) sends, if the data volume of the content data after compression is within the available recording capacity of the recording medium (23), an instruction to the recording device (200) to compress the content data for recording the content data.

FIG.1

**Description**

FIELD

Embodiments described herein relate generally to a recorder, a recording device, and a recorder control method.

BACKGROUND

In recent years, with the advancement in the home network technology, it has become common practice that video content recorded on a recorder is copied or moved to another device via a network. For example, it has become common practice that video content recorded on a recorder, which is connected to a television receiver, is transmitted to a recording device connected via a wireless local area network (LAN), and is copied into an optical disk, such as a Blue-ray disk (BD) or a digital versatile disk (DVD), by the recording device.

Meanwhile, since optical disks have a limited recording capacity, content data may not be copied entirely into a single optical disk depending on the data volume. In such a case, the device checks the recording capacity or the remaining disk space of an optical disk that is inserted therein, and the image quality of content data is lowered to ensure that the content data is entirely stored in the optical disk.

Consider that a recorder, which is connected to a conventional recorder via a network such as a wireless LAN, performs data compression using a bit-rate converting function or a data compression function to reduce the data volume of content data. In this case, it is unclear whether the compressed data can be stored entirely in a recording medium such as an optical disk.

SUMMARY

In general, according to one embodiment, a recorder comprises an information receiving module, a content selection receiving module, a data volume calculating module, a data volume determining module, and a sending module. The information receiving module is configured to receive, from a recording device connected to the recorder via a network, an available recording capacity of a recording medium in the recording device and information indicating the maximum compressibility of the data compression function of the recording device. The content selection receiving module is configured to receive selection of content data to be sent to the recording device. The data volume calculating module is configured to calculate, based on the maximum compressibility received by the information receiving module, the data volume of the content data compressed at the maximum compressibility. The data volume determining module is configured to determine whether the data volume of the content data after compression calculated by the data volume calculating module is within the available recording capacity of the recording medium received by the information receiving module. The sending module is configured to send, if the data volume determining module determines that the data volume of the content data after compression is within the available recording capacity of the recording medium, an instruction to the recording device to compress the content data for recording the content data.

BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram of a network content copying system according to an embodiment;
FIG. 2 is an exemplary schematic diagram of a portion of functional information sent from a recording device in the embodiment;
FIG. 3 is an exemplary diagram of a device selection screen in the embodiment;
FIG. 4 is an exemplary diagram of a drive selection screen in the embodiment;
FIG. 5 is an exemplary diagram of a content selection screen in the embodiment;
FIG. 6 is an exemplary diagram of a compression instruction receiving screen in the embodiment;
FIG. 7 is a schematic diagram of a portion of content metadata that contains a compression instruction regarding content data in the embodiment; and
FIG. 8 is an exemplary sequence diagram of a content copying operation performed in the network content copying system in the embodiment.

DETAILED DESCRIPTION

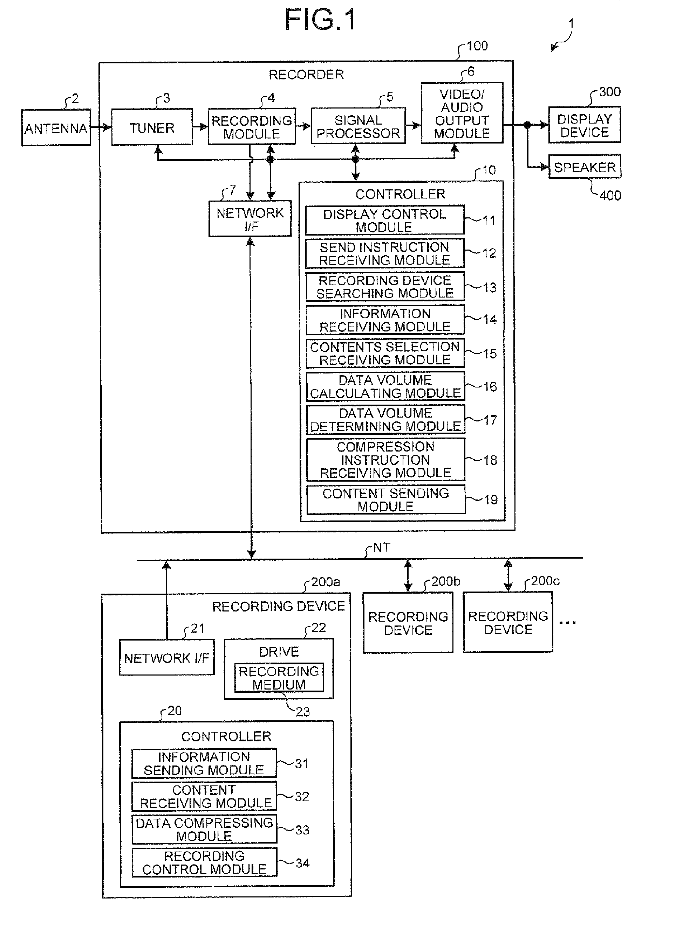

FIG. 1 is a block diagram of a network content copying system 1 according to an embodiment. As illustrated in FIG. 1, the network content copying system 1 comprises a recorder 100 and a plurality of recording devices (200a, 200b, 200c, ...), which are communicable connected by a network NT, such as a wired local area network (LAN) or a wireless LAN. In the following, the recording devices (200a, 200b, 200c, ...) are collectively referred to as recording devices 200.

To the recorder 100, a display device 300 and a speaker 400 are connected via a bus or an interface (I/F) . The display device 300 may comprise, for example, a liquid crystal display (LCD) or a plasma display. The speaker 400 may be built in the display device 300.

First, described below is a hardware configuration of the recorder 100, which is used for recording program content (hereinafter, "content") of a program that is broadcast by digital broadcasting. As illustrated in FIG. 1, the recorder 100 comprises a tuner 3, a recording module 4, a signal processor 5, a video/audio output module 6, a network I/F 7, and a controller 10, which are interconnected by a bus or the like.

In the embodiment, the recorder 100 is described as a hard disk drive (HDD) recorder comprising an HDD as the recording module 4. However, alternatively, the recorder 100 may also be a television receiver capable of simultaneous recording, in an built-in HDD, the content data of programs being broadcast on a plurality of channels. In this case, the display device 300 and the speaker 400 are built in the recorder 100.

The tuner 3 receives content data from a broadcasting station via an antenna 2, and outputs the content data to the recording module 4 and the controller 10. The content data refers to a transport stream (TS) that is obtained by multiplexing motion video data, audio data, and other control data.

According to an instructions from the controller 10, the recording module 4 records the content data output by the tuner 3. According to an instructions from the controller 10, the signal processor 5 converts the content data recorded on the recording module 4 into video and audio signals, and outputs those signals to the video/audio output module 6.

The video/audio output module 6 outputs the video and audio signals to the display device 300 and the speaker 400, respectively, via various interfaces. Consequently, the video in the content is displayed on the display device 300, and the audio in the content is output from the speaker 400 in synchronization with the displayed video.

The controller 10 comprises a central processing unit CPU) , a read only memory (ROM) , and a random access memory (RAM) . The controller 10 controls the signal processor 5 and the video/audio output module 6, and performs various types of processing on the video recorded on the recording module 4.

Described below is a hardware configuration of the recording device 200. As illustrated in FIG. 1, the recording device 200 mainly comprises a network I/F 21, a drive 22, and a controller 20. The drive 22 may be an HDD drive provided with an HD as a recording medium 23, or a Blue-ray disk (BD) drive or a digital versatile disk (DVD) drive that is used by inserting therein optical disks such as BDs or DVDs as the recording medium 23, respectively.

The recording method of the recording device 200 is not particularly limited. The drive 22 may be an HDD used with magnetic disks. The drive 22 may also be a DVD drive or a BD drive used with optical disks. Moreover, the recording device 200 may comprise more than one drive 22.

The controller 20 comprises a CPU, a ROM, and a RAM, and controls the drive 22 to record the content data received via the network I/F 21 on the recording medium 23.

Described below is a functional configuration of the recorder 100. In the controller 10 of the recorder 100, the CPU loads a computer program from the ROM into the RAM and executes it. With this, as illustrated in FIG. 1, the controller 10 implements functional modules including a display control module 11, a send instruction receiving module 12, a recording device searching module 13, an information receiving module 14, a content selection receiving module 15, a data volume calculating module 16, a data volume determining module 17, a compression instruction receiving module 18, and a content sending module 19.

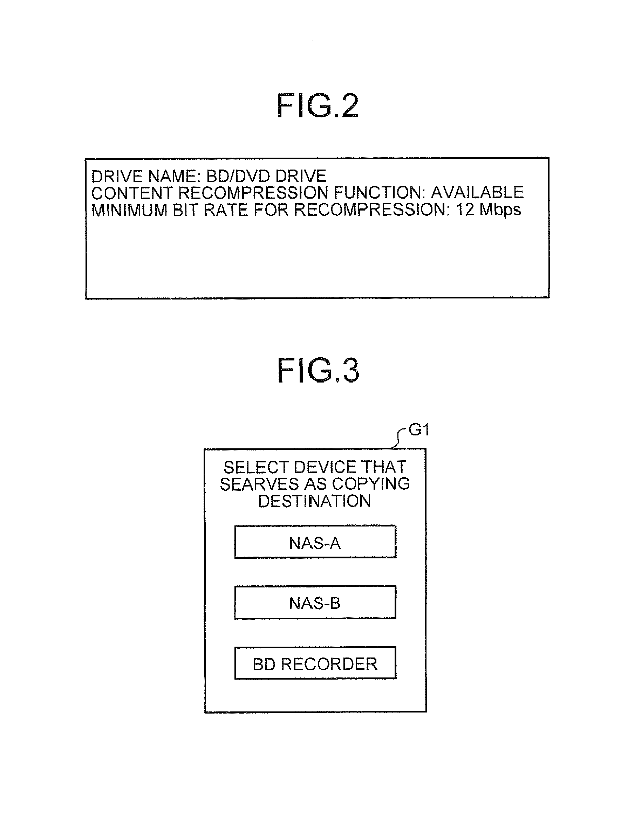

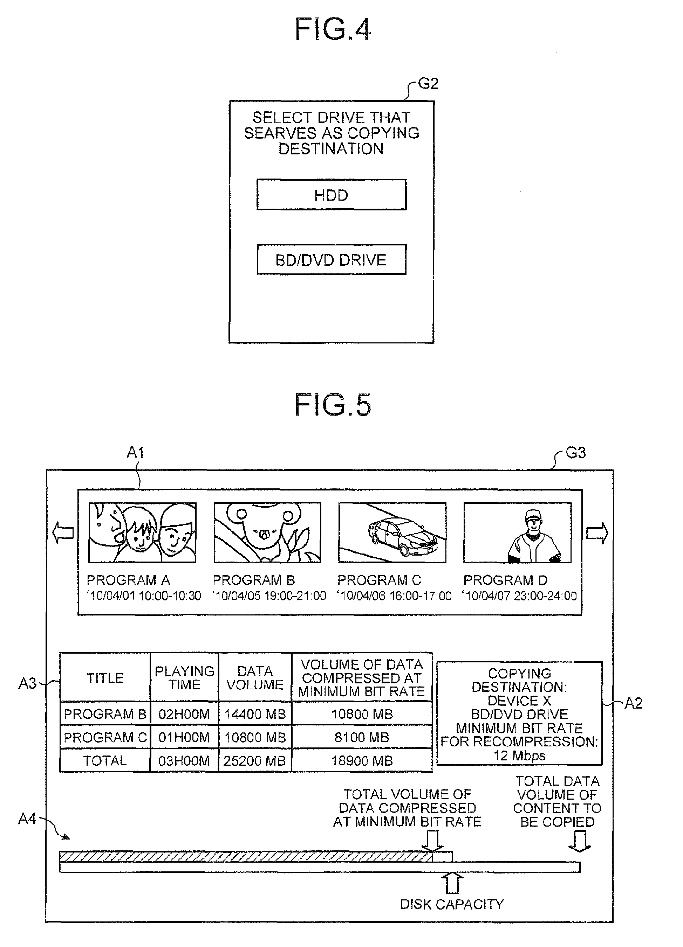

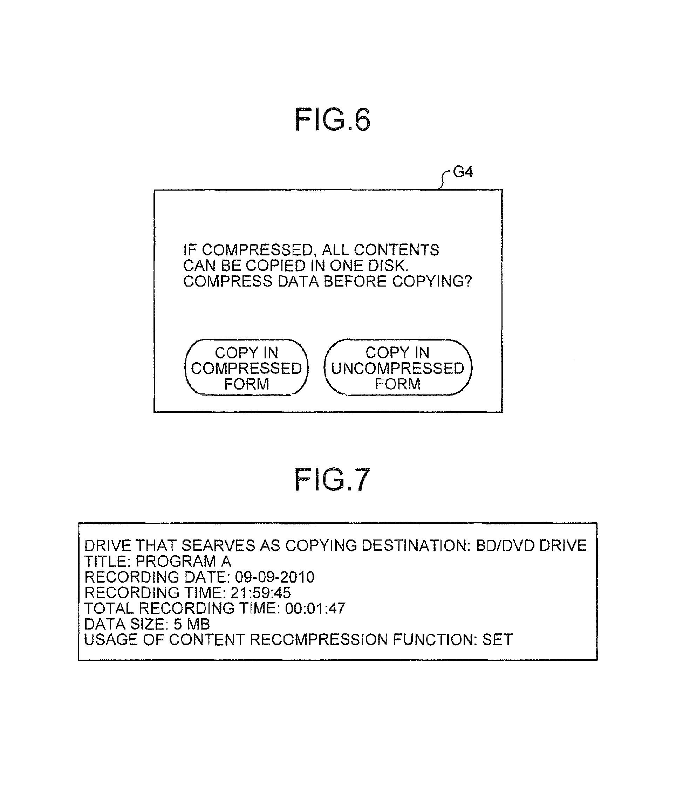

The display control module 11 displays an electronic program guide (EPG) obtained via the tuner 3, a list of contents stored in the recording module 4, a menu screen enabling selection of operations such as recording or playing, and a graphical user interface (GUI) enabling input of various selections on the display device 300 via the video/audio output module 6. Besides, the display control module 11 displays GUIs such as a device selection screen G1 (see FIG. 3), a drive selection screen G2 (see FIG. 4), a content selection screen G3 (see FIG. 5), and a compression instruction receiving screen G4 (see FIG. 6) on the display device 300.

The send instruction receiving module 12 receives, from the user, a send instruction for sending the content data to at least one of the recording devices 200 connected to the network NT. The send instruction includes an instruction to copy content data or an instruction to move content data. Hereinafter, copying and moving of content data is simply referred to as "copying".

More specifically, if copying content is selected from a menu screen (not illustrated) displayed by the display control module 11 for selection of operations such as recording or playing, or if a copy key on a remote controller (not illustrated) is pressed, the send instruction receiving module 12 receives this event as a send instruction.

If the send instruction receiving module 12 receives a send instruction, the recording device searching module 13 searches for the recording devices 200 connected to the network NT.

More specifically, the recording device searching module 13 implements the universal plug and play (UPnP) module and automatically detects devices connected to the network NT. That is, to search for the recording devices 200 connected to the network NT, the recording device searching module 13 periodically broadcasts a search request such as an M-SEARCH request to each device connected to the network NT. Upon receiving the search request, the recording device 200 sends back to the recorder 100 a search response such as an M-SEARCH response as a notification that the recording device 200 is present on the network. Thus, the recording device searching module 13 can find the recording devices 200.

The information receiving module 14 receives device information and functional information, which will be described later, from each of the recording devices 200 connected to the network NT.

The device information is information regarding the corresponding recording device 200. Examples of the device information include the Internet protocol (IP) address of the recording device 200, drive information related to the drive 22 in the recording device 200, and medium information indicating the available recording capacity of the recording medium 23. As specific examples of the device information, "device description" indicates services available in the recording device 200 and "service description" indicates operations that can be performed in those services.

The functional information indicates the details of the functions of the recording device 200. Examples of the functional information include information indicating whether the recording device 200 has a data compression function for reducing the data volume of content data. If the recording device 200 has a compression function (content recompression function) for reducing the data volume of content data by changing the bit rate or the codec of the content data, then the detailed information of the compression function is specified in the functional information.

For example, if the recording device 200 has a bit-rate converting function that can be performed on content data, then a bit rate that is usable by the recording device 200 upon recompressing the content data is specified in the functional information. Moreover, if the recording device 200 has a function of automatically compressing content data to fit within the available recording capacity of an optical disk, then information regarding the compression function is specified in the functional information.

Besides, the functional information also includes a minimum bit rate for recompression that is the minimum bit rate usable by the recording device 200. If using the minimum bit rate for recompression, it becomes possible to maximize the compressibility of content data. Hence, the minimum bit rate for recompression can be represented as the maximum compressibility of the data compression function of the recording device 200.

The maximum compressibility is not limited to the minimum bit rate for recompression. Rather, when the recording device 200 compresses content data, the maximum compressibility may correspond to a compression function that achieves the smallest data volume of the compressed content data.

FIG. 2 illustrates an example of a portion of the functional information sent from the recording device 200. In FIG. 2, the drive 22 is assumed to be a BD/DVD drive that functions as a BD drive as well as a DVD drive, and the functional information is given for the same. Besides, as the functional information, it is illustrated that the BD/DVD drive has a content recompression function and that the minimum bit rate for recompression is 12 Mbps.

Described below are details of the operation of the recorder 100 to receive the device information and the functional information from the recording device 200 and display the device selection screen G1 (see FIG. 3) and the drive selection screen G2 (see FIG. 4) on the display device 300 based on the device information and the functional information.

The information receiving module 14 sends to the recording devices 200 an HTTP GET request as a device information request and requests the recording devices 200 to send the device information. Upon receiving the device information request, each of the recording devices 200 sends to the recorder 100 a GET response as a device information response containing the device information of the recording device 200.

Based on the search result of the recording device searching module 13 and the device information of the recording device 200 received by the information receiving module 14, the display control module 11 displays on the display device 300 the device selection screen G1 (see FIG. 3) that enables selection of the recording device 200 (device) for copying content.

FIG. 3 illustrates an example of the device selection screen G1. As illustrated in FIG. 3, on the device selection screen G1, the display control module 11 displays all the recording devices 200 connected to the network NT in a selectable manner. In the example of FIG. 3, the recording devices 200 displayed on the device selection screen G1 are network-attached storages (NAS), i.e., NAS-A, NAS-B, not equipped with an optical drive and a BD recorder equipped with an optical drive.

Based on the device selection screen G1, the send instruction receiving module 12 receives from the user a selection of the recording device 200 to be content copying (transfer) destination. For example, if "BD recorder" is selected from the device selection screen G1, the send instruction receiving module 12 receives a notification that the BD recorder is selected as the recording device 200 to be copying destination.

With respect to the recording device 200 selected from the device selection screen G1, the information receiving module 14 issues a SOAP request as a functional information request and requests the selected recording device 200 to send its functional information. Upon receiving the functional information request, the recording device 200 sends to the recorder 100 a SOAP response as a functional information response containing the functional information of the recording device 200.

Once the recording device 200 is selected as copying destination on the device selection screen G1, the display control module 11 refers to the device information and the functional information received by the information receiving module 14, and displays on the display device 300 the drive selection screen G2 (see FIG. 4) that enables selection of the drive 22 to be copying destination from among the drive devices installed in the selected recording device 200.

FIG. 4 illustrates an example of the drive selection screen G2. For example, when "BD recorder" is selected in FIG. 3, the display control module 11 refers to the drive information specified in the functional information of the BD recorder, and displays "HDD" and "BD/DVD drive" as drives installed in the BD recorder.

Based on the drive selection screen G2, the send instruction receiving module 12 receives a selection of the drive 22 to be copying destination. For example, when "BD/DVD drive" is selected in FIG. 4, the send instruction receiving module 12 receives a notification that "BD/DVD drive" is selected as the drive 22 to be copying destination.

Described below with reference to FIG. 5 is an operation to prompt the user to select content (target content) to be copied in the recording device 200.

Once a drive to be copying destination is selected from the drive selection screen G2 (see FIG. 4), the display control module 11 displays on the display device 300 the content selection screen G3 (see FIG. 5) that enables selection of target content to be copied in the recording device 200 from a list of contents stored in the recording module 4.

FIG. 5 illustrates an example of the content selection screen G3. As illustrated in FIG. 5, the content selection screen G3 has a content display area A1 in which the list of contents stored in the recording module 4 is displayed with titles or thumbnails of the contents. The user can operate a left-right key on the remote controller (not illustrated) for moving a cursor over contents (program A to program D) to be copied, and, by pressing a select key on the remote controller, he/she can select one or more target contents to be copied.

Examples of contents displayed on the content selection screen G3 include, in addition to the contents stored in the recording module 4 of the recorder 100, contents stored in the other recording devices 200 such as the recording devices 200b and 200c illustrated in FIG. 1.

The content selection screen G3 is configured to receive selection of operation such as additional selection of content to be copied, cancel of selected content, and termination of copying as needed.

Besides, as illustrated in FIG. 5, the content selection screen G3 has a device information display area A2 for displaying the device name of the recording device 200 that has been selected as copying destination on the device selection screen G1, the drive name of the copying destination that has been selected on the drive selection screen G2, and the minimum bit rate for recompression usable by the selected recording device 200.

Based on the content selection screen G3, the content selection receiving module 15 receives the selection of target content to be sent to the recording device 200. Consider that an enter key on the remote controller is pressed while the programs B and C are selected. In this case, the content selection receiving module 15 receives an instruction indicating that the content data of the programs B and C is to be copied.

Based on the total volume of content data to be copied (hereinafter, "target content data") selected on the content selection screen G3 and the minimum bit rate for recompression usable by the recording device 200, the data volume calculating module 16 calculates the total data volume of compressed data under a condition when all the target contents are recompressed at the minimum bit rate for recompression. The total data volume of compressed data at the minimum bit rate for recompression is calculated by multiplying the normal-speed playing time by the minimum bit rate for recompression as expressed by the following Equation (1):

$$\text{total data volume of compressed data} = (\text{normal-speed playing time}) \times (\text{minimum bit rate for recompression}) \qquad (1)$$

On the content selection screen G3 (see FIG. 5), the display control module 11 displays the total data volume of the target contents, the total data volume of the compressed data calculated by the data volume calculating module 16 assuming that the target contents are compressed at the minimum bit rate for recompression, and the available recording capacity of the recording medium 23.

Thus, the content selection screen G3 illustrated in FIG. 5 has a data volume display area A3 for displaying the titles of the target contents selected as described above, the playing time of the respective contents when played at the normal speed, the total data volume of the respective uncompressed target contents, and the data volume of the respective compressed target contents and the total data volume calculated by the data volume calculating module 16 assuming that the target contents are compressed at the minimum bit rate for recompression.

Besides, the content selection screen G3 illustrated in FIG. 5 has a data-volume comparison display area A4 to graphically display the total data volume of the uncompressed target contents, the total data volume of the compressed data calculated by the data volume calculating module 16 assuming that the target contents are compressed at the minimum bit rate for recompression, and the available recording capacity (disk capacity) of the recording medium 23 in the form of a bar graph for comparison purposes.

Thus, in the data-volume comparison display area A4, the pre-compression data volume and the post-compression data volume are displayed in a comparable manner against the available recording capacity of the recording medium 23. Hence, when the post-compression data volume is at the smallest, it becomes possible to make the user intuitively know whether all the target contents can be copied in the recording medium 23.

Described below with reference to FIG. 6 is operation to prompt the user to select whether to recompress the target contents.

Once the enter key on the remote controller is pressed upon selecting target content on the content selection screen G3, the content selection receiving module 15 receives an instruction indicating that the selected target content is to be copied in the drive 22 selected on the drive selection screen G2.

The data volume determining module 17 determines, if the target content data is compressed at the minimum bit rate for recompression, whether the total data volume of post-recompression target contents is within the available recording capacity of the recording medium 23.

If the data volume determining module 17 determines that the total data volume of the post-recompression target contents is within the available recording capacity of the recording medium 23, the display control module 11 displays on the display device 300 the compression instruction receiving screen G4 (see FIG. 6) that enables the user to select whether to copy the target contents in a compressed form or in an uncompressed form.

FIG. 6 illustrates an example of the compression instruction receiving screen G4. As illustrated in FIG. 6, on the compression instruction receiving screen G4, a message such as "If compressed, all contents can be copied in one disk" is displayed indicating that the data volume of the post-compression content data is within the available recording capacity of a single disk. In other words, on the compression instruction receiving screen G4, the determination result of the data volume determining module 17 is displayed. Besides, on the compression instruction receiving screen G4, a message such as "Compress data before copying?" is also displayed to prompt the user to decide whether to perform data compression.

Based on the compression instruction receiving screen G4, the compression instruction receiving module 18 receives the selection of whether to compress target content data by the recording device 200. That is, if "copy in compressed form" is selected in FIG. 6, the compression instruction receiving module 18 receives a compression instruction that instructs recompression of the target content data. On the other hand, if "copy in uncompressed form" is selected, the compression instruction receiving module 18 receives an instruction that instructs not to recompress the target content data.

While the description above is given for the case of receiving the selection of whether to recompress all target contents, it is not so limited. As another example, the selection of whether to recompress target contents may be received on an individual basis.

When the compression instruction receiving module 18 receives a compression instruction to recompress target content data, the content sending module 19 generates content metadata that contains the compression instruction of compressing (recompressing) the content data prior to recording. On the other hand, when the compression instruction receiving module 18 receives an instruction not to recompress the target content data, the content sending module 19 generates content metadata that contains no compression instruction.

FIG. 7 illustrates an example of a portion of content metadata that contains a compression instruction regarding content data. As illustrated in FIG. 7, the content metadata contains the drive name of copying destination, the title of target content, the date and time of recording the target content, the total recording time of the target content, and the data size of the target content.

The content metadata contains, as a content data compression instruction, information instructing the use of the content recompression function (i.e., usage of content recompression function: set). In the case of content metadata containing no content data compression instruction, information instructing the use of the content recompression function is deleted or such metadata is generated in which the content recompression function is set not to be used (i.e., usage of content recompression function: not set).

Then, the content sending module 19 sends to the recording device 200 a create object request as a copying request to request copying of target content into the recording medium 23 of the recording device 200. It is assumed herein that the copying request contains the content metadata generated as described above.

Upon receiving the copying request, the recording device 200 sends back a create object response as a copying response. That is, based on the content metadata, the recording device 200 determines whether the target content can be copied in the recording medium 23. If copying is possible, the recording device 200 sends to the recorder 100 a copying response indicating that the target content can be copied. On the other hand, if copying is not possible, the recording device 200 sends to the recorder 100 a copying response indicating that the target content cannot be copied.

When the copying response indicating that copying is possible is received from the recording device 200, the content sending module 19 sends the target content data to the recording device 200. On the other hand, when the copying response indicating that copying is not possible is received from the recording device 200, the content sending module 19 instructs the display control module 11 to display on the display device 300 a notification that copying is not possible or an error message indicating the reason for such a situation.

When the target content selected on the content selection screen G3 is stored in the other recording devices 200 (200b and 200c) as described above, the content sending module 19 may send to the recording device 200 information such as uniform resource locator (URL) of the location where the target content data is stored.

When the data volume determining module 17 determines that the total data volume of post-recompression target contents is within the available recording capacity of the recording medium 23, the content sending module 19 may not display the compression instruction receiving screen G4, but automatically send to the recording device 200 content metadata containing the abovementioned compression instruction with the target content data.

Described below is a functional configuration of the recording device 200. In the controller 20 of the recording device 200, a CPU loads a computer program from a ROM into a RAM and executes it. With this, as illustrated in FIG. 1, the controller 20 implements functional modules including an information sending module 31, a content receiving module 32, a data compressing module 33, and a recording control module 34.

Upon receipt of a search request from the recorder 100, the information sending module 31 sends back a search response to the recorder 100 via the network I/F 21 and the network NT. Besides, upon receipt of a device information request from the recorder 100, the information sending module 31 sends back the device information of the corresponding recording device 200 as a device information response to the recorder 100 via the network I/F 21 and the network NT. Further, upon receipt of a functional information request from the recorder 100, the information sending module 31 sends back the functional information of the corresponding recording device 200 as a functional information response to the recorder 100 via the network I/F 21 and the network NT.

The content receiving module 32 receives, from the recorder 100, the abovementioned content metadata as a copying request, and, based on the content metadata, determines whether target content can be copied into the recording medium 23. When copying is possible, the content receiving module 32 sends to the recorder 100 a copying response indicating that the target content can be copied, and then receives the content data sent by the recorder 100. On the other hand, when copying is not possible, the content receiving module 32 sends to the recorder 100 a copying response indicating that the target content cannot be copied.

Meanwhile, as described above, if target content selected on the content selection screen G3 is stored in the other recording device 200 (200b and 200c), the content receiving module 32 may receive the content data from the other recording device 200.

According to the compression instruction specified in the content metadata received by the content receiving module 32, the data compressing module 33 performs compression operation to reduce the data volume of the received content data.

More specifically, based on information such as the size, the file format, and the bit rate of the content data specified in the content metadata, the data compressing module 33 compresses (recompresses) the content data to fit within the available recording capacity of the recording medium 23. Herein, the data compressing module 33 recompresses the content data at a bit rate equal to or greater than the abovementioned minimum bit rate for recompression.

If the recording device 200 has the recompression function of compressing content data to fit within the available recording capacity of an optical disk (the recording medium 23), the data compressing module 33 compresses the data to fit within the recording capacity of a single optical disk by the recompression function. That is, the data compressing module 33 selects such a bit rate that ensures that the data volume of received content data fits in the available recording capacity of an optical disk, and recompresses the content data at the selected bit rate.

Besides, the data compressing module 33 may recompress the content data by changing the bit rate or by performing format (codec) conversion.

The recording control module 34 controls the drive 22 and records the content data compressed by the data compressing module 33 on the recording medium 23. If the content metadata received by the content receiving module 32 does not contain a compression instruction, the content data is not recompressed. Thus, the recording control module 34 records the received content data as it is on the recording medium 23. If all received content data cannot be stored in a single optical disk, the recording control module 34 may copy the content data in a plurality of optical disks.

While the data compressing module 33 is described above as performing data compression, the recording device 200 may comprise a data processor as hardware for data compression so that the data processor performs data compression.

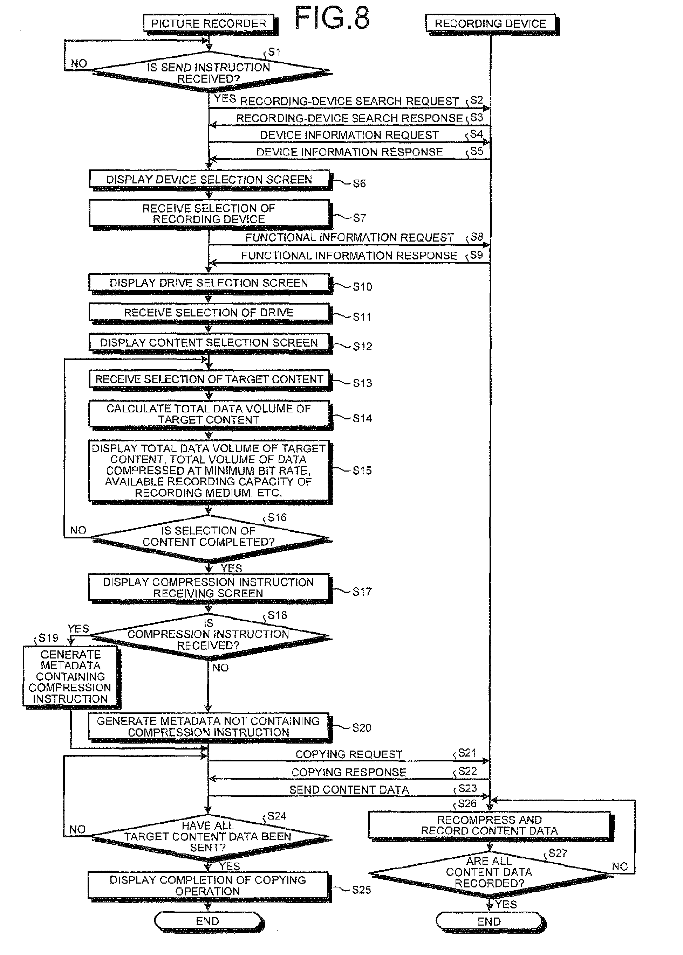

Described below is a sequence of content copying operation performed in the network content copying system 1. FIG. 8 is a sequence diagram for explaining the sequence of content copying operation performed in the network content copying system 1.

First, the recorder 100 determines whether a send (copy) instruction regarding content is received (S1) . If copying is selected from a menu screen (not illustrated) or if a copy key on a remote controller (not illustrated) is pressed, the recorder 100 receives a send instruction regarding content (Yes at S1). If no send instruction regarding content is received (No at S1), the recorder 100 returns to S1 and waits for an instruction.

Subsequently, to search for the recording devices 200 connected to the network NT, the recorder 100 periodically broadcasts a search request to each device connected to the network NT and searches for the recording devices 200 (S2).

Upon receiving the search request, the recording device 200 sends back a search response to the recorder 100 as a notification that the recording device 200 is present on the network (S3).

Upon receiving the search response, the recorder 100 sends a device information request to the recording devices 200 (S4) . Upon receiving the device information request, each of the recording devices 200 sends to the recorder 100 a device information response that contains the device information thereof (S5).

Based on the received device information, the recorder 100 displays on the display device 300 the device selection screen G1 that enables selection of the recording device 200 to be copying destination (S6). From the device selection screen G1, the recorder 100 receives selection of the recording device 200 to be copying destination (S7).

To the recording device 200 selected from the device selection screen G1, the recorder 100 issues a functional information request and requests the selected recording device 200 to send the functional information (S8). The selected recording device 200 then sends to the recorder 100 a functional information response with the functional information thereof (S9) . While, in this content copying operation, the recorder 100 separately requests for the device information and the functional information, it is not so limited. The device information and the functional information may be requested at the same time at S4.

Based on the functional information, the recorder 100 displays the drive selection screen G2 on the display device 300 (S10), and receives selection of the drive 22 as copying destination (S11). Subsequently, the recorder displays the content selection screen G3 on the display device 300 (S12), and receives selection of target content to be copied (S13). Then, the recorder 100 calculates the total data volume of selected target content data (S14). The recorder 100 then displays, on the content selection screen G3, the calculated total data volume, the total data volume of post-recompression target contents recompressed at the minimum bit rate for recompression, and the available recording capacity of the recording medium 23 (S15).

Subsequently, the recorder 100 determines whether the selection of contents is completed on the content selection screen G3 (S16). While the selection of contents is ongoing (No at S16), the recorder 100 repeats the operations from S13 to S16 until the selection of target contents is completed. When the selection of contents is completed (Yes at S16), the recorder 100 displays the compression instruction receiving screen G4 on the display device 300 (S17).

The recorder 100 then determines whether a compression instruction instructing data compression of the target contents is received from the compression instruction receiving screen G4 (S18). If a compression instruction is received (Yes at S18) , the recorder 100 generates content metadata that contains the compression instruction (S19) . On the other hand, when no compression instruction is received (No at S18), the recorder 100 generates content metadata containing no compression instruction (S20).

Subsequently, based on the content metadata generated at S19 or S20, the recorder 100 sends to the recording device 200 a copying request for copying the target contents into the recording device 200 (S21) . Upon receiving the copying request, the recording device 200 refers to the received content metadata and determines whether the target contents can be copied. The recording device 200 then sends back a copying response depending on the determination result to the recorder 100 (S22).

If the copying response received from the recording device 200 indicates that copying is not possible, the recorder 100 displays an error message (not illustrated) on the display device 300. On the other hand, if the copying response received from the recording device 200 indicates that copying is possible, the recorder 100 sequentially sends the content data of the target contents to the recording device 200 (S23) . After the content data of each content has been sent, the recorder 100 determines whether the content data of all the target contents have been sent (S24) . When the content data of all the target contents have not yet been sent (No at S24), the recorder 100 sends a copying request for copying the next target content data (S21).

When the content data of all the target contents have been sent (Yes at S24) , the recorder 100 displays on the display device 300 a notification of completion of the copying operation (S25), and the operation ends.

Meanwhile, as described above, if it is possible to select whether to compress the contents on an individual basis, once the target content data is sent at S23, returning to S18, it may be determined whether data compression is selected regarding the next target content data, and thereafter the operations from S18 and S24 may be repeated until all the target contents get copied.

The recording device 200 receives the content data sent by the recorder 100 at S23, and recompresses the received content data before recording (writing) it on the recording medium 23 (S26). Subsequently, the recording device 200 determines whether all the content data are recorded on the recording medium 23 (S27). If all the content data are not yet recorded on the recording medium 23 (No at S27), then the recording device 200 repeats the operations of S26 and S27. Once all the content data gets recorded on the recording medium 23 (Yes at S27), the operation ends.

In the description given above, the drive 22 to be copying destination is first selected through the device selection screen G1 and the drive selection screen G2, and then content is selected through the content selection screen G3. However, the selection sequence is not so limited. As another example, content may be selected through the content selection screen G3 before selecting the drive 22 as copying destination through the device selection screen G1 and the drive selection screen G2. Besides, the timing of displaying the compression instruction receiving screen G4 is not limited as described above, and a compression instruction may be received at a different timing.

As described above, according to the embodiment, when content data is compressed at the maximum compressibility of the data compression function of a recording device connected to the network, it is determined whether the post-compression data volume is within the available recording capacity of a recording medium therein. Hence, in a recording device connected to the device via a network, it is possible to determine whether target content data for copying can be copied into the recording medium. This improves convenience to copy or move content data into a recording device that is connected to the device via a network.

A computer program can be executed on a computer to realize the same function as the recorder 100 and the recording device 200 according to the embodiment. The computer program may be provided as being stored in a ROM in advance. The computer program may also be provided as being stored in a computer-readable storage device such as a compact disk read only memory (CD-ROM), a flexible disk (FD), a compact disk recordable (CD-R), or a digital versatile disk (DVD) in the form of an installable or executable file.

Further, the computer program may be stored in a computer connected over a network such as the Internet and downloaded therefrom via the network. Still further, the computer program may be provided or distributed through a network such as the Internet.

The various modules of the systems described herein can be implemented as software applications, hardware and/or software modules, or components on one or more computers, such as servers. While the various modules are illustrated separately, they may share some or all of the same underlying logic or code.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1. A recorder (100) comprising:

    an information receiving module (14) configured to receive, from a recording device (200) connected to the recorder (100) via a network (NT), an available recording capacity of a recording medium (23) in the recording device (200) and information indicating maximum compressibility of a data compression function of the recording device (200);
    a content selection receiving module (15) configured to receive selection of content data to be sent to the recording device (200);
    a data volume calculating module (16) configured to calculate, based on the maximum compressibility received by the information receiving module (14), data volume of the content data compressed at the maximum compressibility;
    a data volume determining module (17) configured to determine whether the data volume of the content data after compression calculated by the data volume calculating module (16) is within the available recording capacity of the recording medium (23) received by the information receiving module (14); and
    a sending module (19) configured to send, if the data volume determining module (17) determines that the data volume of the content data after compression is within the available recording capacity of the recording medium (23), an instruction to the recording device (200) to compress the content data for recording the content data.

2. The recorder (100) of Claim 1, further comprising a compression instruction receiving module (18) configured to receive, if the data volume determining module (17) determines that the data volume of the content data after compression is within the available recording capacity of the recording medium (23), selection of whether to compress the content data by the recording device (200), wherein
if the compression instruction receiving module (18) receives selection of compressing the content data, the sending module (19) sends the instruction to the recording device (200).

3.  The recorder (100) of Claim 1 or 2, further comprising a send instruction receiving module (12) configured to receive selection of the recording device (200) as a destination for sending the content data, wherein
    the data volume determining module (17) is configured to determine whether the data volume of the content data after compression calculated by the data volume calculating module (16) is within the available recording capacity of the recording medium (23) in the recording device (200) selection of which is received by the send instruction receiving module (12).

4.  The recorder (100) of any one of Claims 1 to 3, further comprising a display control module (11) configured to display a determination result of the data volume determining module (17) on a display device.

5.  The recorder (100) of any one of Claims 1 to 4, further comprising a second display control module (11) configured to display, on a display device, the available recording capacity of a recording medium (23) received by the information receiving module (14), data volume of the content data received by the content selection receiving module (15), and the data volume of the content data after compression calculated by the data volume calculating module (16).

6.  The recorder (100) of any one of Claims 2 to 5, wherein the compression instruction receiving module (18) is configured to receive selection of whether to perform compression with respect to each content data.

7.  A recording device (200) comprising:

    a data compressing module (33) configured to compress content data to be recorded on a recording medium (23); and
    an information sending module (31) configured to send, to a recorder (100) connected to the recording device (200) via a network (NT), information indicating maximum compressibility of a data compression function of the data compressing module (33).

8.  The recording device (200) of Claim 7, further comprising:

    a receiving module (32) configured to receive, from the recorder (100) , an instruction to compress the content data before recording the content data; and
    a content receiving module (32) configured to receive the content data from another recording device connected to the recorder (100) or the recording device (200) via the network (NT), wherein
    the data compressing module (33) is configured to compresses the content data according to the instruction.

9.  A recorder control method applied to a recorder, comprising:

    receiving, from a recording device connected to the recorder via a network, an available recording capacity of a recording medium in the recording device and information indicating maximum compressibility of a data compression function of the recording device;
    receiving selection of content data to be sent to the recording device;
    calculating, based on the maximum compressibility, data volume of the content data compressed at the maximum compressibility;
    determining whether the data volume of the content data after compression calculated at the calculating is within the available recording capacity of the recording medium; and
    sending, if the data volume of the content data after compression is determined at the determining to be within the available recording capacity of the recording medium, an instruction to the recording device to compress the content data for recording the content data.

# FIG.1

# FIG.2

DRIVE NAME: BD/DVD DRIVE
CONTENT RECOMPRESSION FUNCTION: AVAILABLE
MINIMUM BIT RATE FOR RECOMPRESSION: 12 Mbps

# FIG.3

G1

SELECT DEVICE THAT
SEARVES AS COPYING
DESTINATION

NAS-A

NAS-B

BD RECORDER

# FIG.4

G2

SELECT DRIVE THAT
SEARVES AS COPYING
DESTINATION

| HDD |
|---|

| BD/DVD DRIVE |
|---|

# FIG.5

A1

G3

PROGRAM A
'10/04/01 10:00-10:30

PROGRAM B
'10/04/05 19:00-21:00

PROGRAM C
'10/04/06 16:00-17:00

PROGRAM D
'10/04/07 23:00-24:00

A3

| TITLE | PLAYING TIME | DATA VOLUME | VOLUME OF DATA COMPRESSED AT MINIMUM BIT RATE |
|---|---|---|---|
| PROGRAM B | 02H00M | 14400 MB | 10800 MB |
| PROGRAM C | 01H00M | 10800 MB | 8100 MB |
| TOTAL | 03H00M | 25200 MB | 18900 MB |

COPYING
DESTINATION:
DEVICE X
BD/DVD DRIVE
MINIMUM BIT RATE
FOR RECOMPRESSION:
12 Mbps

A2

TOTAL VOLUME OF
DATA COMPRESSED
AT MINIMUM BIT RATE

TOTAL DATA
VOLUME OF
CONTENT TO
BE COPIED

A4

DISK CAPACITY

# FIG.6

~G4

IF COMPRESSED, ALL CONTENTS
CAN BE COPIED IN ONE DISK.
COMPRESS DATA BEFORE COPYING?

COPY IN
COMPRESSED
FORM

COPY IN
UNCOMPRESSED
FORM

# FIG.7

DRIVE THAT SEARVES AS COPYING DESTINATION: BD/DVD DRIVE
TITLE: PROGRAM A
RECORDING DATE: 09-09-2010
RECORDING TIME: 21:59:45
TOTAL RECORDING TIME: 00:01:47
DATA SIZE: 5 MB
USAGE OF CONTENT RECOMPRESSION FUNCTION: SET

# FIG.8

PICTURE RECORDER

RECORDING DEVICE

S1 — IS SEND INSTRUCTION RECEIVED? — NO

YES — RECORDING-DEVICE SEARCH REQUEST — S2

RECORDING-DEVICE SEARCH RESPONSE — S3

DEVICE INFORMATION REQUEST — S4

DEVICE INFORMATION RESPONSE — S5

DISPLAY DEVICE SELECTION SCREEN — S6

RECEIVE SELECTION OF RECORDING DEVICE — S7

FUNCTIONAL INFORMATION REQUEST — S8

FUNCTIONAL INFORMATION RESPONSE — S9

DISPLAY DRIVE SELECTION SCREEN — S10

RECEIVE SELECTION OF DRIVE — S11

DISPLAY CONTENT SELECTION SCREEN — S12

RECEIVE SELECTION OF TARGET CONTENT — S13

CALCULATE TOTAL DATA VOLUME OF TARGET CONTENT — S14

DISPLAY TOTAL DATA VOLUME OF TARGET CONTENT, TOTAL VOLUME OF DATA COMPRESSED AT MINIMUM BIT RATE, AVAILABLE RECORDING CAPACITY OF RECORDING MEDIUM, ETC. — S15

S16 — IS SELECTION OF CONTENT COMPLETED? — NO

YES

DISPLAY COMPRESSION INSTRUCTION RECEIVING SCREEN — S17

S18 — IS COMPRESSION INSTRUCTION RECEIVED?

YES — S19 — GENERATE METADATA CONTAINING COMPRESSION INSTRUCTION

NO

GENERATE METADATA NOT CONTAINING COMPRESSION INSTRUCTION — S20

COPYING REQUEST — S21

COPYING RESPONSE — S22

SEND CONTENT DATA — S23

S26 — RECOMPRESS AND RECORD CONTENT DATA

S24 — HAVE ALL TARGET CONTENT DATA BEEN SENT? — NO

YES

DISPLAY COMPLETION OF COPYING OPERATION — S25

S27 — ARE ALL CONTENT DATA RECORDED? — NO

YES

END

END